# EUROPÄISCHE PATENTANMELDUNG

(11) **EP 2 081 005 A2**
(43) Veröffentlichungstag der Anmeldung: **22.07.2009**
(21) Anmeldenummer: 08105832.3
(22) Anmeldetag: 20.11.2008
(51) Int. Cl.: G01K 1/08

(54) **Temperatursensor**

(30) Priorität: 18.01.2008 DE 102008005160
(71) Anmelder: ROBERT BOSCH GMBH, 70442 Stuttgart (DE)
(72) Erfinder: Opp, Andreas, 71277, Rutesheim (DE); Schneider, Jens, 71229, Leonberg (DE); Rosenland, Marc, 74343, Hohenhaslach (DE)

(57) **Zusammenfassung**

Die Erfindung betrifft ein Verfahren zur Herstellung eines Temperatursensors (10), wobei das Verfahren das Einfüllen eines keramischen Pulvers (22) in ein Schutzrohr (23) und das Einführen eines Thermistorelements (21) in das Schutzrohr (23) umfasst, so, dass es durch das keramische Pulver (22) zu einer Fixierung des Thermistorelements (21) in dem Schutzrohr (23) kommt und wobei das Verfahren weiterhin das Verdichten des keramischen Pulvers (22) durch zumindest bereichsweise Verringerung eines Umfangs des Schutzrohrs (23) vorsieht.

## Beschreibung

### Stand der Technik

Die Erfindung geht aus von einem Verfahren zur Herstellung eines Temperatursensors nach dem Oberbegriff des unabhängigen Anspruchs 1.

Ein derartiger Temperatursensor ist beispielsweise aus der WO 2005/075949 A1 bekannt und weist ein Thermistorelement auf, das durch ein keramisches Pulver in einem Schutzrohr fixiert ist. Bei der Herstellung des in WO 2005/075949 A1 beschriebenen Temperatursensors wird das keramische Pulver zusammen mit dem Thermistorelement in das Schutzrohr eingerüttelt.

Nachteilig hieran ist, dass das keramische Pulver nicht oder nur höchstens geringfügig verdichtet wird, was zur Folge hat, dass das keramische Pulver nur einen geringen mechanischen Schutz des Thermistorelements gewährleisten kann. Aus der höchstens geringen Verdichtung des keramischen Pulvers resultiert ferner eine geringe Wärmeleitfähigkeit des keramischen Pulvers und damit eine hohe Ansprechzeit des Temperatursensors.

### Vorteil der Erfindung

Das erfindungsgemäße Verfahren zur Herstellung eines Temperatursensors mit den kennzeichnenden Merkmalen des unabhängigen Anspruchs 1 hat demgegenüber den Vorteil, dass sich der mechanische Schutz des Thermistorelements verbessert und dass sich die Wärmeleitfähigkeit des keramischen Pulvers erhöht. Hierfür ist vorgesehen, dass das keramische Pulver verdichtet wird, indem der Umfang des Schutzrohrs zumindest bereichsweise verringert wird. Ein durch das erfindungsgemäße Verfahren hergestellter Temperatursensor weist eine verkürzte Ansprechzeit auf.

Durch die in den abhängigen Ansprüchen aufgeführten Maßnahmen sind vorteilhafte Weiterentwicklungen des im unabhängigen Anspruch angegebenen Verfahrens möglich.

Wird ein Schutzrohr verwendet, das zu Beginn des Verfahrens einseitig geschlossen ist, so ist es vorteilhaft, das keramische Pulver zeitlich vor dem Thermistorelement in das Schutzrohr einzubringen, da so die Zugänglichkeit des offenen Endes des Schutzrohrs beim Einbringen des keramischen Pulvers hoch ist.

Wird ein Schutzrohr verwendet, das zu Beginn des Verfahrens beidseitig offen ist, ergibt sich der Vorteil, dass die Schutzrohre als Stangenmaterial zugeführt werden können und erst unmittelbar vor den erfindungsgemäßen Verfahrensschritten, zum Beispiel durch Laserschneiden, vereinzelt werden müssen.

In diesem Fall ist es vorteilhaft, das Thermistorelement durch eines der zunächst offenen Enden in das Schutzrohr einzubringen, dieses Ende durch ein Verschlusselement zu verschließen und anschließend das keramische Pulver durch das andere offene Ende einzubringen. Auf diese Weise kann vermieden werden, dass das keramische Pulver unbeabsichtigt aus dem Schutzrohr austritt.

Wird das Ende, durch das das keramische Pulver eingeführt wird, im gleichen Verfahrensschritt mit der Verringerung eines Umfangs des Schutzrohrs verschlossen, so reduziert sich vorteilhafterweise die Anzahl der zur Herstellung des Temperatursensors erforderlichen Verfahrensschritte.

Wird ein Umfang des Schutzrohres um 10 - 20 % reduziert und/oder wird der Porenanteil des keramischen Pulvers auf weniger als 20 % reduziert, so ist die Ansprechzeit des Temperatursensors vorteilhafterweise besonders verkürzt.

Vorteilhafterweise wird ein Umfangs des Schutzrohrs mittels Rundkneten reduziert, da auf diese Weise die Verdichtung des keramischen Pulvers besonders wirksam möglich ist.

Unter dem Begriff "Rundkneten" (oft auch als "Hämmern" oder "Rundhämmern" bezeichnet) versteht man ein Verfahren zur nicht spanenden, inkrementellen Umformung von Werkstücken. Mittels des Rundknetens werden insbesondere Rohre, Stäbe und Drähte umgeformt. Typischerweise bestehen die Umformwerkzeuge aus 2 bis 8 Segmenten, die konzentrisch um das Werkstück angeordnet sind. Der Eingriff der Umformwerkzeuge erfolgt dabei im Allgemeinen für kurze Zeitdauern, hochfrequent und mit kleinem Hub. In den Phasen, in denen kein Werkzeugeingriff erfolgt, kann zwischen Werkzeug und Werkstück eine rotatorische und/oder translatorische Relativbewegung ausgeführt werden.

### Zeichnung

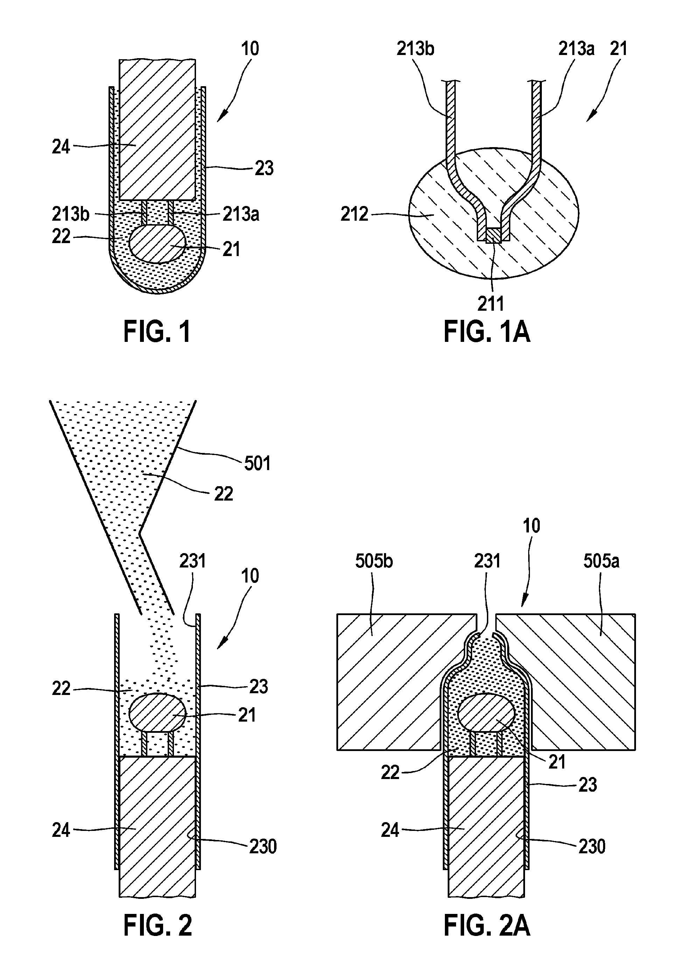

Ausführungsbeispiele der Erfindung sind in der Zeichnung dargestellt und in der nachfolgenden Beschreibung näher erläutert. Ein erfindungsgemäßer Temperatursensor ist in Figur 1 in Schnittdarstellung gezeigt. Die Figur 1a stellt einen Ausschnitt der Figur 1 vergrößert und detailliert dar.

Die Figuren 2 und 2a zeigen den Temperatursensor in Schnittdarstellungen während verschiedener Prozessschritte der Herstellung gemäß einem ersten Ausführbeispiel des erfindungsgemäßen Verfahrens.

Die Figuren 3 und 3a zeigen den Temperatursensor in Schnittdarstellungen während verschiedener Prozessschritte der Herstellung gemäß einem zweiten Ausführbeispiel des erfindungsgemäßen Verfahrens.

### Beschreibung des Ausführungsbeispiels

Die Figur 1 zeigt einen erfindungsgemäßen Temperatursensor 10. Der Temperatursensor 10 umfasst ein Thermistorelement 21, ein keramisches Pulver 22 und ein Schutzgehäuse 23. Das Thermistorelement 21 wird durch das verdichtete keramische Pulver 22 in dem Schutzgehäuse 23 fixiert und isoliert. Der Temperatursensor 10 weist ferner ein Verschlusselement 24 auf, dessen Aufgabe es ist, einen Querschnitt des Schutzrohres 23 auszufüllen, und somit das Schutzrohr abzudichten.

Das Thermistorelement 21 ist ein temperaturabhängiger Widerstand, zum Beispiel ein NTC-Widerstand (negativ temperature coefficient, Heißleiter) oder ein PTC-Widerstand (positiv temperature coefficient, Kaltleiter).

Der Aufbau des Thermistorelements 21 ist in Figur 1a dargestellt. Das Thermistorelement 21 weist ein Widerstandsteil 211 auf, das ein Halbleitermaterial, beispielsweise Fe₂O₃, ZnTiO₄ oder MgCr₂O₄ enthält. Das Widerstandsteil 211 definiert die Temperatur-Widerstands-Charakteristik des Thermistorelements 21. Das Widerstandsteil 211 wird durch zwei Zuleitungen 213a, 213b kontaktiert. Eine Umhüllung 212 umgibt das Widerstandsteil 211 und Teile der Zuleitungen 213a, 213b. Die Umhüllung 212 dient dem Schutz des Widerstandsteils 211. Die Umhüllung 212 enthält Glas oder einen anderen thermisch und mechanisch beständigen Stoff.

Die Zuleitungen 213a, 213b münden auf der der Umhüllung 212 abgewandten Seite in ein Verschlusselement 24, im Ausführungsbeispiel eine mineralisch isolierte Leitung. Die mineralisch isolierte Leitung besteht aus einem thermisch und mechanisch beständigen Material und hat zusätzlich zu seiner Dichtfunktion die Aufgabe der Isolation der Zuleitungen 213a, 213b. Alternativ ist es auch möglich, statt einer mineralisch isolierten Leitung ein anderes Verschlusselement 24 zu benutzen und den Schutz der Zuleitungen 213a, 213b allein durch das verdichtete keramische Pulver 22 sicher zu stellen. In einer weiteren Alternative weist der erfindungsgemäße Temperatursensor 10 kein Verschlusselement 24 auf oder weist ein Verschlusselement 24 auf, das aber nicht einen Querschnitt des Schutzrohres 23 verschließt. In diesem Fall wird ein Hilfsteil verwendet, mit dem ein Querschnitt des Schutzrohres 23 während der Verdichtung des keramischen Pulver 22 temporär verschlossen wird und das nach der Verdichtung des keramischen Pulvers 22 wieder entnommen wird.

Die Figuren 2 und 2a zeigen ein erstes Ausführungsbeispiel des erfindungsgemäßen Verfahrens. Figur 2 zeigt ein längliches, beidseitig offenes Schutzrohr 23. Durch ein offenes Ende 230 des Schutzrohrs 23 ist das Thermistorelement 21 zusammen mit dem Verschlusselement 24 eingeführt, wodurch dieses Ende 230 verschlossen ist. Mittels einer Befülleinrichtung 501 wird durch das andere offene Ende 231 des Schutzrohrs 23 das keramische Pulver 22, zum Beispiel Aluminiumoxid oder Magnesiumoxid oder eine Mischung dieser Stoffe gefüllt.

Anschließend wird, wie in Figur 2a gezeigt, das Schutzrohr 23 einem Rundknetverfahren unterworfen. Dabei greifen beispielsweise vier konzentrisch um das Schutzrohr angeordnete Werkzeugsegmente 505a, 505b in das Schutzrohr ein. Von den vier Werkzeugsegmenten 505a, 505b sind in Figur 2a zwei Werkzeugsegmente 505a, 505b zu sehen. Es ist selbstverständlich auch möglich, dass das Rundknetverfahren mit einer anderen Anzahl von Werkzeugsegmenten erfolgt. Durch das Rundkneten verschließt sich zum einen das dem Thermistorelement 21 abgewandte Ende 231 des Schutzrohrs, zum anderen verringert sich der Umfang des Schutzrohres 23 im Bereich des Endes 231. Als Folge der Umfangsverringerung kommt es zu einer Verdichtung des im Schutzrohrs befindlichen keramischen Pulvers 22. Der Porengehalt des verdichteten keramischen Pulvers 22 liegt im Beispiel bei 15 %.

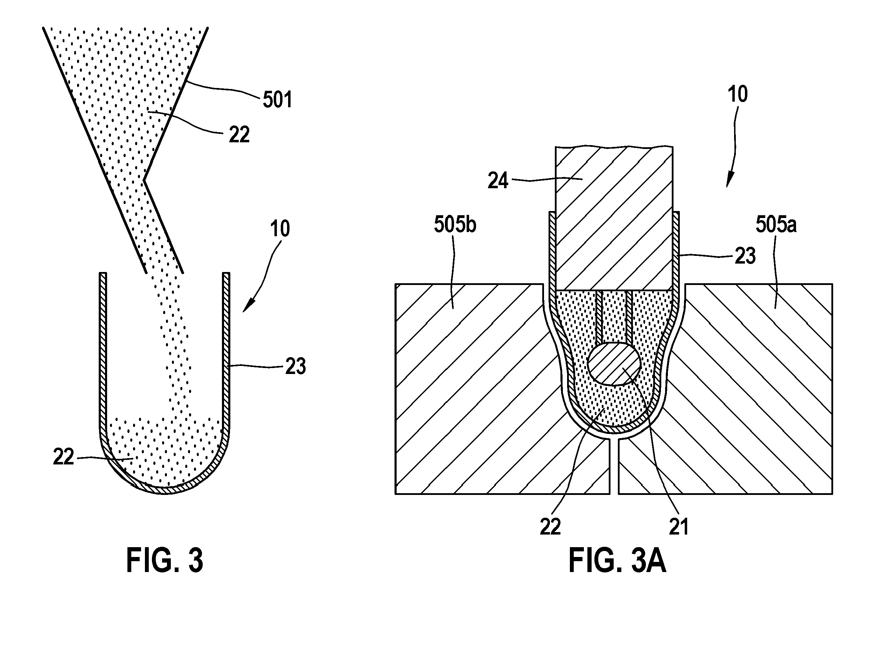

Die Figuren 3 und 3a zeigen ein zweites Ausführungsbeispiel des erfindungsgemäßen Verfahrens. Figur 3 zeigt ein längliches, einseitig offenes Schutzrohr 23. Mittels einer Befülleinrichtung 501 wird das keramische Pulver 22 in das Schutzrohrs 23 gefüllt. Das keramische Pulver enthält zum Beispiel Aluminiumoxid und/oder Magnesiumoxid. Anschließend wird das Thermistorelement 21 in das Schutzrohr eingeführt und in das keramische Pulver 22 getaucht. Das zunächst offene Ende des Schutzrohres 23 wird durch das Einbringen des Verschlusselements 24 verschlossen.

Anschließend wird, wie in Figur 3a gezeigt und analog dem ersten Ausführungsbeispiel, das Schutzrohr 23 einem Rundknetverfahren unterworfen.

Durch das Rundkneten reduziert sich der Umfang des Schutzrohrs 23 im Bereich des Endes des Schutzrohrs 23, das dem zunächst offenen Ende gegenüber liegt. Als Folge der Umfangsverringerung kommt es zu einer Verdichtung des im Schutzrohrs befindlichen keramischen Pulvers 22. Der Porengehalt des verdichteten keramischen Pulvers 22 liegt im Beispiel bei < 20 %.

In beiden Ausführungsbeispielen wäre es alternativ auch möglich, statt Rundkneten ein anderes umformendes Verfahren, zum Beispiel Biegen oder Pressen, einzusetzen.

## Patentansprüche

1. Verfahren zur Herstellung eines Temperatursensors (10), wobei das Verfahren folgende Schritte aufweist:
- Einfüllen eines keramischen Pulvers (22) in ein Schutzrohr (23)
- Einführen eines Thermistorelements (21) in das Schutzrohr (23)
wobei es durch das keramische Pulver (22) zu einer Fixierung des Thermistorelements (21) in dem Schutzrohr (23) kommt, **dadurch gekennzeichnet, dass** das Verfahren weiterhin folgenden Schritt aufweist:
- Verdichten des keramischen Pulvers (22) durch zumindest bereichsweise Verringerung eines Umfangs des Schutzrohrs (23).

2. Verfahren nach Anspruch 1, **dadurch gekennzeichnet, dass** das Schutzrohr (23) ein zunächst offenes und ein geschlossenes Ende aufweist, dass das Einfüllen des keramischen Pulvers (22) in das Schutzrohr (23) zeitlich vor dem Einführen des Thermistorelements (21) in das Schutzrohr (23) erfolgt, dass das zunächst offene Ende des Schutzrohres (23) durch ein Verschlusselement (24) verschlossen wird und dass im Anschluss an diese Verfahrensschritte das Verdichten des keramischen Pulvers (22) durch eine zumindest bereichsweise Verringerung eines Umfangs des Schutzrohrs (23) erfolgt.

3. Verfahren nach Anspruch 1, **dadurch gekennzeichnet, dass** das Schutzrohr (23) zu Beginn des Verfahrens ein erstes und ein zweites jeweils zunächst offenes Ende (230, 231) aufweist.

4. Verfahren nach Anspruch 3, **dadurch gekennzeichnet, dass** das Thermistorelement (21) durch das erste zunächst offene Ende (230) des Schutzrohrs (23) in das Schutzrohr (23) eingeführt wird, dass das keramische Pulver (22) durch das zweite zunächst offene Ende (231) des Schutzrohrs (23) in das Schutzrohrs (23) eingefüllt wird, dass das Einführen des Thermistorelements (21) in das Schutzrohr (23) sowie ein Verschließen des ersten zunächst offenen Endes (230) des Schutzrohres (23) durch ein Verschlusselement (24) zeitlich vor dem Einfüllen des keramischen Pulvers (22) in das Schutzrohr (23) erfolgt und dass im Anschluss an diese Verfahrensschritte das zweite zunächst offene Ende (231) des Schutzrohrs (23) verschlossen wird und das Verdichten des keramischen Pulvers (22) durch eine zumindest bereichsweise Verringerung eines Umfangs des Schutzrohrs (23) erfolgt.

5. Verfahren nach Anspruch 4, **dadurch gekennzeichnet, dass** das Verschließen des zweiten zunächst offenen Endes (231) des Schutzrohrs (23) im gleichen Verfahrensschritt erfolgt wie das Verdichten des keramischen Pulvers (22).

6. Verfahren nach einem der vorherigen Ansprüche, **dadurch gekennzeichnet, dass** das keramische Pulver (22) MgO und/oder Al2O3 enthält.

7. Verfahren nach einem der vorherigen Ansprüche, **dadurch gekennzeichnet, dass** ein Umfang des Schutzrohres (23) um 10 - 20 % reduziert wird.

8. Verfahren nach einem der vorherigen Ansprüche, **dadurch gekennzeichnet, dass** durch die Verringerung des Umfang des Schutzrohres (23) der Porenanteil des keramischen Pulvers (22) sich auf einen Wert von höchstens 20 Vol-% verringert.

9. Verfahren nach einem der vorherigen Ansprüche, **dadurch gekennzeichnet, dass** der Umfang des Schutzrohres (23) durch Rundkneten verringert wird.

10. Temperatursensor (10), hergestellt durch ein Verfahren nach einem der Ansprüche 1 bis 9, **dadurch gekennzeichnet, dass** das keramische Pulver einen Porengehalt von weniger als 20 Vol-% aufweist.

11. Temperatursensor (10) nach Anspruch 10, **dadurch gekennzeichnet, dass** das Thermistorelement (21) aus einem Widerstandsteil (211) und einer den Wiederstandsteil umschließenden Umhüllung (212) besteht, der Wiederstandsteil (211) durch die Umhüllung (212) hindurch mit zwei Zuleitungen (213a, 213b) verbunden ist und die Zuleitungen (213a, 213b) zumindest teilweise in dem keramischen Pulver (22) verlaufen.
